# FASCICULE DE BREVET EUROPEEN

(11) **EP 1 204 457 B1**
(45) Date de publication et mention de la délivrance du brevet: **17.12.2003**
(21) Numéro de dépôt: 00949659.7
(22) Date de dépôt: 06.07.2000
(51) Int. Cl.: B01D 53/32, B01D 53/22, C01B 13/02

(54) **MEMBRANE CERAMIQUE CONDUCTRICE PAR IONS OXYDE**
SAUERSTOFF-IONE LEITENDE KERAMIKMEMBRAN
OXIDE ION CONDUCTIVE CERAMIC MEMBRANE

(30) Priorité: 26.07.1999 FR 9909670
(43) Date de publication de la demande: 15.05.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: DEL GALLO, Pascal, F-91410 DOURDAN (FR); GOURIOU, Guylaine, F-78280 Guyancourt (FR)
(74) Mandataire: Conan, Philippe Claude
(86) Numéro de dépôt international: FR0001951
(87) Numéro de publication internationale: WO01007149

(56) Documents cités:
- WO-A-98/48923
- FR-A- 2 770 149
- US-A- 5 770 326

## Description

L'invention se rapporte au domaine de l'électrochimie solide.

La cellule électrochimique élémentaire mise en oeuvre pour séparer l'oxygène de l'air ou d'un mélange gazeux le contenant, est constituée généralement d'un système ternaire électrolyte solide / électrodes / collecteurs de courant.

Les électrolytes solides utilisés pour la séparation de l'oxygène de mélange gazeux, sont des oxydes céramiques dopés qui, à la température d'utilisation se présentent sous forme d'un réseau cristallin présentant des lacunes en ions oxydes. Les structures cristallines associées peuvent être par exemple, des phases cubique, fluorite, pérovskite, brown-millerite, dites d'Aurivillius ; J.C. Boivin et G. Mairesse ont référencé toutes les phases cristallines conducteurs anioniques O²⁻ dans un article général (Chem. Mat., 1998, pp2870-2888; "Recent Material Developments in Fast Oxide Ion Conductors").

Les matériaux d'électrodes associés à l'électrolyte solide sont généralement des pérovskites. Ce sont des matériaux possédant une structure cristalline fondée sur la structure de la pérovskite naturelle, CaTiO₃ et qui présentent de bonnes propriétés de conductivité mixte (ionique et électronique), grâce à cette structure cristalline cubique, dans laquelle les ions métalliques se trouvent aux sommets et au centre d'un cube élémentaire et les ions oxygène aux milieux des arrêtes de ce cube. Les matériaux d'électrodes peuvent aussi être des mélanges matériaux pérovskites/conducteur purement ionique ou encore des mélanges à base de matériaux possédant d'autres phases cristallines, par exemple de type Aurivillius, brown-millerite ou pyrochlore.

Le collectage de courant est assuré, soit par un métal ou une laque de métal, soit par un mélange métal / céramique "oxyde inerte" tel que l'alumine, par un mélange métal / carbure tel que le carbure de silicium ou par un mélange métal / nitrure tel que le nitrure de silicium, dans lequel le rôle principal de l'oxyde, du carbure ou du nitrure est de bloquer mécaniquement les phénomènes de ségrégation / frittage apparaissant du fait des hautes températures de fonctionnement (700 °C<T<900 °C), notamment lorsque l'on utilise l'argent comme métal collecteur de courant, soit par un mélange, métal / céramique oxyde "conducteur mixte" tel qu'un oxyde de structure pérovskite de la famille des manganites de lanthane dopés au strontium, soit par un mélange métal / céramique oxyde "conducteur ionique" tel que la zircone stabilisée à l'yttrium.

Cependant la demanderesse a constaté que lorsque l'on fait fonctionner, à une température comprise entre 700 et 900 °C, que ce soit à pression atmosphérique, soit sous pression interne d'oxygène de 20×10⁵ Pa (20 bars), soit sous pression externe d'oxygène 120×10⁵ Pa (120 bars), une cellule électrochimique tubulaire, dans laquelle l'électrolyte solide est de l'oxyde de zirconium stabilisé avec 8% d'oxyde d'yttrium (YSZ 8%), les électrodes sont en La_{0.9}Sr_{0.1}MnO_{3-δ}.(LSM) et les collecteurs de courant sont une laque d'argent, on observe un vieillissement accéléré de cette cellule, qui se traduit par une augmentation de 70% du voltage de cellule en 40 h de fonctionnement ; en remplaçant les collecteurs de courant en laque d'argent par des collecteurs de courant "cermet", mélanges métal / céramiques, Ag/YSZ(8%) (50/50, % en volume) ou Ag/LSM (50/50, % en volume), le vieillissement est ralenti. Le phénomène de dégradation n'est cependant pas totalement supprimé car l'on constate une augmentation de 6-15 % du voltage total pour 100 h de fonctionnement. Lorsque l'on travaille sous pression interne d'oxygène 20×10⁵ Pa (20 bars) à 780 °C, on observe aussi une baisse du rendement faradique et une chute du potentiel.

Dans le cas de collecteurs de courant à base de laque d'argent, le vieillissement (1<P<20×10⁵ Pa) et la chute du rendement faradique sous pression (P > 20×10⁵ Pa) et à température élevée (800°C) ont pu être attribués à trois phénomènes concomitants :
- un phénomène de ségrégation / frittage de l'argent pour des température supérieures à 750 °C ;
- un phénomène d'évaporation de l'argent accentué par le balayage sous air chaud de la cellule, pour des températures supérieures à 700 °C et,
- un phénomène de diffusion de l'argent sous pression (20×10⁵ Pa) à travers l'électrolyte solide à température élevée (>780°C).

L.S. Wang et S.A. Barnett ont décrit l'utilisation de LaCoO₃ pour recouvrir des cellules à base de zircones stabilisée recouvertes d'un mélange Ag/YSZ. Ces travaux ont montré qu'après 150 h à 750°C. le système YSZ/Ag-YSZ(50/50)/couche LaCoO₃ (1µm) ne perdait d'argent. contrairement au système sans couche "protectrice" de LaCoO₃ pour lequel il y avait ségrégation et perte en masse d'argent par évaporation au cours du temps. Cependant, la pérovskite LaCoO₃ ne présente pas de bonnes propriétés de conductivité mixte.

La demanderesse a donc cherché un moyen de limiter voir de stopper la dégradation décrite ci-dessus.

C'est pourquoi l'invention a pour objet, une membrane céramique conductrice par ions oxyde selon la revendication 1, caractérisée en ce qu'elle comprend un volume non nul d'épaisseur totale non nulle E, d'un ensemble constitué :
a) - d'une couche dense de surfaces opposées S et S' et d'épaisseur non nulle e, d'un électrolyte solide ayant, à la température d'électrolyse, une structure cristalline conductrice par ions oxyde,
b) - de deux électrodes poreuses, conductrices mixtes et d'épaisseurs non nulles e₁ et e'₁, identiques ou différentes, plaquées sur des surfaces non nulles s₁ et s'₁, identiques ou différentes, des deux faces opposées de surfaces S et S' dudit électrolyte solide,
c) - de deux collecteurs de courant poreux, d'épaisseurs non nulles e₂ et e'₂, identiques ou différentes, plaqués sur des surfaces non nulles s₂ et s'₂, identiques ou différentes, desdites deux électrodes poreuses et,
d) - d'au moins une couche poreuse de revêtement, d'épaisseur, e₃ non nulle, plaquée sur une surface non nulle s₃, d'au moins un desdits collecteurs, constituée d'un matériau, ou d'un mélange de matériaux, chimiquement compatible avec les matériaux, ou les mélange de matériaux, desdits électrodes, collecteurs et électrolyte solide, et dont la température de frittage est très proche des températures de frittage des matériaux, ou des mélanges de matériaux constituant lesdits électrodes, collecteurs et électrolyte solide et caractérisée en ce que l'épaisseur E de ladite membrane, est égale à la somme des épaisseurs de chacun des éléments cités.

Par structure cristalline conductrice par ions oxyde, on entend dans le cadre la présente invention, toute structure cristalline qui, à la température d'utilisation, se présente sous forme d'un réseau cristallin présentant des lacunes en ions oxydes. Les structures cristallines associées peuvent être par exemple, des phases cubique, fluorite, pérovskite, brown-millerite, dites d'Aurivillius ou encore celles citées dans : J.C. Boivin et G. Mairesse, Chem. Mat., 1998, pp2870-2888; "Recent Material Developments in Fast Oxide lon Conductors".

Par matériau ou mélange de matériaux, compatible chimiquement avec celui du ou des collecteurs de courant, on désigne dans le présent exposé, tout matériau ou mélange de matériaux, qui, à une température de frittage comprise environ entre 600°C et 1000°C, n'entre pas en réaction chimique avec celui ou ceux de la couche qu'il revêt, à savoir dans le cas présent, le matériau ou le mélange de matériaux constituant le ou les collecteurs de courant. Une telle réaction chimique serait éventuellement mise en évidence par l'apparition d'un ou plusieurs composés chimiques absents des matériaux ou des mélanges de matériaux initiaux.

Par poreuses, on indique dans le présent exposé, que les couches de matériaux concernés doivent être capables de laisser diffuser le dioxygène. De façon générale, leur indice de porosité est compris entre 10% et 70%, plus précisément entre 30 et 60 %.

Par conductrices mixtes, on indique dans le présent exposé, que les couches de matériaux concernés sont des conducteurs ioniques et électroniques.

Par températures de frittage très proches, on indique que la différence entre les températures de frittage de la couche poreuse de revêtement et du collecteur de courant est inférieure ou égale à environ 200 °C. Lorsque cette différence devient trop importante, on observe un phénomène de délamination, signe d'une mauvaise adhésion des couches frittées.

L'invention a notamment pour objet une membrane céramique, telle que définie précédemment, comprenant deux couches de revêtement d'épaisseurs e₃ et e'₃, identiques ou différentes, plaquées sur des surfaces non nulles s₃, et s'₃, identiques ou différentes, de chacun desdits collecteurs de courant et caractérisée en ce que l'épaisseur E dudit volume de ladite membrane est égale à la somme des épaisseurs e + e₁ + e'₁ + e₂ + e'₂ + e₃ + e'₃ et plus particulièrement, une membrane céramique caractérisée en ce que e₁ = e'₁, e₂ = e'₂ et, le cas échéant, e₃ = e'_{3.}

Dans la membrane céramique telle que définie précédemment, e est généralement comprise entre environ 0,25 mm et environ 2 mm et plus particulièrement, entre environ 0,5 mm et environ 1 mm, e₁ et e'₁ sont généralement comprises entre environ 1 µm et environ 50 µm et plus particulièrement, entre environ 10 µm et environ 30 µm, e₂ et e'₂ sont généralement comprises entre environ 1 µm et environ 50 µm et plus particulièrement, entre environ 10 µm et environ 30 µm, e2 et e'2 sont généralement comprises entre environ 1 µm et environ 100 µm et plus particulièrement, entre environ 20 µm et environ 60 µm et, e₃ et le cas échéant, e'₃, sont généralement comprises entre environ 1 µm et environ 200 µm et plus particulièrement entre environ 20 µm et environ 100 µm.

Selon une première variante particulière, l'invention a pour objet, une membrane céramique, telle que définie précédemment, consistant en une plaque de surfaces planes S et d'épaisseur E et notamment, une plaque de longueur L comprise entre environ 1 cm et environ 1 m et plus particulièrement, entre 5 cm et environ 50 cm et de largeur 1 comprise entre environ 1 cm et environ 1 m et plus particulièrement entre 5 cm et environ 50 cm.

Selon une deuxième variante particulière, l'invention a pour objet une membrane céramique, consistant en un cylindre de diamètre extérieur D et de diamètre intérieur d, caractérisée en ce que la couche de support dudit cylindre, est la couche dense cylindrique, d'épaisseur e, d'électrolyte solide, et en ce que la moitié de la différence D - d est égale à la somme des épaisseurs e, e_{1,}, e'₁, e₂, e'₂ et e₃, et éventuellement e'₃ et, plus particulièrement, une membrane céramique cylindrique de longueur L comprise environ entre 1 cm et environ 1 m et plus particulièrement entre 10 cm et 50 cm.

Les électrolytes solides mis en oeuvre dans la membrane céramique objet de la présente invention, sont des oxydes céramiques dopés qui, à la température d'utilisation se présentent sous forme d'un réseau cristallin lacunaire en ions oxydes. Les composés utilisés possèdent une structure fluorite. Ces oxydes sont représentés par la formule (I) :

(M_{α}O_{β})₁₋ₓ (R_{γ}O_{δ})ₓ (I),

dans laquelle M représente au moins un atome trivalent ou tétravalent principalement choisi parmi, le bismuth (Bi), le cérium (Ce), le zirconium (Zr), le thorium (Th), le gallium (Ga) ou l'hafnium (Hf), a et β sont tels que la structure M_{α}O_{β} est électriquement neutre, R représente au moins un atome divalent ou trivalent choisi principalement parmi le magnésium (Mg), le calcium (Ca) ou le baryum (Ba), le strontium (Sr), le gadolinium (Gd), le scandium (Sc), l'ytterbium (Yb), l'yttrium (Y), le samarium (Sm) l'erbium (Er), l'indium (In), le Niobium (Nb) ou le lanthane (La), γ et δ sont tels que la structure R_{γ}O_{δ} est électriquement neutre. x est généralement compris entre 0,05 et 0,30 et plus particulièrement, entre 0, 075 et 0,15.

Un électrolyte solide peut consister, par exemple, en un seul oxyde MO₂ associé à un ou à plusieurs oxydes R_{γ}O_{δ} ou bien en un mélange d'oxydes MO₂ associé à un ou à plusieurs oxydes R_{γ}O_{δ}. Comme oxydes céramiques de formule M_{α}O_{β}, il y a principalement l'oxyde de zirconium (ZrO₂), l'oxyde de cérium (CeO₂), l'oxyde d'hafnium (HfO₂), l'oxyde de thorium (ThO₂), l'oxyde de gallium (Ga₂O₃) ou l'oxyde de bismuth (Bi₂O₃). Ces oxydes sont dopés avec un ou plusieurs oxydes choisis généralement parmi l'oxyde de magnésium (MgO), l'oxyde de calcium (CaO), l'oxyde de baryum (BaO), l'oxyde de strontium (SrO), l'oxyde de gadolinium (Gd₂O₃), l'oxyde d'erbium (Er₂O₃), l'oxyde d'indium (In₂O₃), l'oxyde niobium (Nb₂O₃), l'oxyde de scandium (Sc₂O₃), l'oxyde d'ytterbium (Yb₂O₃), l'oxyde d'yttrium (Y₂O₃), l'oxyde de samarium (Sm₂O₃) et l'oxyde de lanthane (La₂O₃). Comme principal exemple d'électrolyte solide, il y a les zircones (oxydes de zirconium), les gallathes (matériaux à base d'oxyde de gallium), les matériaux de type BIMEVOX ou les oxydes de cérium stabilisés comme, par exemple, la zircone stabilisée de formule (Ia) :

(ZrO₂)₁₋ₓ (Y₂O₃)ₓ, (Ia),

dans laquelle x est compris entre 0,05 et 0,15, appelée par la suite YSZ(x en % molaire). Ces composés travaillent à des températures comprises entre 700 et 800 °C.

Les électrodes associées à l'électrolyte solide, de compositions identiques ou différentes, sont en un matériau ou en un mélange de matériaux à structure pérovskites (ABO₃) représentés par la formule (II) :

M₁M₂O₃, (II)

dans laquelle, M₁ représente un ou plusieurs atomes choisis dans familles des alcalino terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, M₂ représente un ou plusieurs atomes choisis les métaux de transition, plus particulièrement parmi Sc, Ti, V, Cr, Mn, Fe, Co, Ni, Cu ou Zn. Dans le cadre de la présente invention, les électrodes, de compositions identiques ou différentes, sont plus particulièrement choisies parmi l'oxyde de lanthane et de nickel (LaNiO₃), les manganites - lanthane - calcium (CaᵤLaᵥMnO_{w}), les manganites - lanthane - strontium (LaᵤSrᵥMnO_{w}), les cobaltites - lanthane - strontium (LaᵤSrᵥCoO_{w}), les cobaltites - lanthane - calcium (CaᵤLaᵥCoO_{w}), les cobaltites - gadolinium - strontium (GdᵤSr_{y}CoO_{w}), les chromites - lanthane - strontium (LaᵤSrᵥCrO_{w}), les ferrites - lanthane - strontium, (LaᵤSrᵥFeO_{w}) ou les ferrocobaltites - lanthane - strontium (LaᵤSrᵥCo_{d}Fe_{c}O_{w}), dans lesquels u + v et c + d sont égaux à 1 et w est tel que la structure en cause est électriquement neutre.

Les collecteurs de courant, plaqués sur lesdites deux électrodes poreuses, de compositions identiques ou différentes, sont constitués essentiellement, soit par un métal, soit par une laque de métal telle que par exemple, une laque d'or ou une laque d'argent, soit par un mélange métal / céramique "oxyde inerte" tel que l'alumine ou par un mélange métal / céramique oxyde "conducteur mixte" tel que un matériau pérovskite ou par un mélange métal / céramique oxyde "conducteur ionique" tel que la zircone stabilisée à l'yttrium (8% mol.) ou par un mélange métal / céramique oxyde "conducteur électronique" tel que l'oxyde de nickel ou par un mélange métal / carbure tel que le carbure de silicium ou par un mélange métal / nitrure tel que le nitrure de silicium. Le métal mis en oeuvre dans les collecteurs de courant est principalement choisi parmi les métaux de transition, plus particulièrement parmi, l'argent, le cuivre, le nickel ou parmi les métaux nobles plus particulièrement parmi l'or, le platine ou le palladium. Il peut également s'agir de fils collecteurs de courant à base de matériaux oxydables mais récouvert d'une fine couche d'or, d'argent ou de platine. Les collecteurs de courant sont plus particulièrement en un mélange d'un métal choisi parmi l'argent ou l'or, avec un ou plusieurs composés de formule (1) telle que définie précédemment ou en un mélange d'un métal choisi parmi l'argent ou l'or, avec un ou plusieurs composés de formule (II) telle que définie précédemment. Les deux collecteurs de courant sont tout particulièrement de composition identique et en un mélange d'argent et de céramique "conductrice ionique" telle que la zircone dopée à l'oxyde d'yttrium comme par exemple, YSZ(8%). Chacun des collecteurs de courant est relié à la partie extérieure du circuit par un fil conducteur électronique, souvent en un métal identique à celui que ledit collecteur comporte.

Selon une variante de la présente invention la membrane céramique, cylindrique telle que définie précédemment, est remplie de billes de mullite ou de zircone, de façon à améliorer la fixation dudit fil audit collecteur de courant. La nature des billes peut également être de type métallique ou carbure de métal, ou de billes de mullite ou zircone, recouverte d'une couche collecteur de courant de même nature ou de nature différente de la couche collecteur de courant de la cellule électrochimique tubulaire.

La couche de revêtement, plaquée sur au moins un desdits collecteurs, peut être conductrice mixte ou isolante. Lorsqu'elle est isolante, il s'agit par exemple d'un émail. Lorsqu'elle est conductrice mixte, il s'agit d'un composé ou d'un mélange de composés de formule (II) telle que définie précédemment. l'invention a plus particulièrement pour objet une membrane céramique telle que définie précédemment, dans laquelle la couche de revêtement, plaquée sur au moins un desdits collecteurs, est un composé de formule (IIa) :

La_{0.8}Sr_{0.2}Co_{0.8}Fe_{0.2}O_{w} (IIa),

dans laquelle w est tel que la structure de formule (IIa), est électriquement neutre. Lorsqu'il y a une couche de revêtement plaquée sur chacun des collecteurs de courant, celles-ci sont de compositions identiques ou différentes.

La membrane céramique, objet de la présente invention est préparée par des séquences successives consistant en un dépôt d'un matériau donné disponible dans le commerce, suivie du frittage de l'ensemble résultant, à partir de l'électrolyte solide pris comme matériau de support de ladite membrane. Ces séquences d'opérations sont bien connues de l'homme du métier. De façon générale, les dépôts successifs sont réalisés par peinture, par pulvérisation (spray), par enrobage par immersion (dip coating) ou par sérigrahie, que ce soit sur la face interne ou sur la face externe du dispositif. Après le dépôt de chaque couche, on procède au frittage sous air, à la température de frittage dudit matériau comprise entre 600°C et 1000°C, selon les matériaux, pendant quelques heures, généralement de 0,5 à 10 heures. De même, l'électrolyte solide, membrane céramique de forme géométrique tubulaire, planaire ou elliptique, est préparé à partir de produits commerciaux et est mis en forme selon des méthodes connue de l'homme du métier.
Selon un dernier aspect de la présente invention, celle-ci a pour objet l'utilisation d'une membrane céramique telle que définie précédemment, pour séparer l'oxygène de l'air ou d'un mélange gazeux en contenant.

Les exemples suivants illustrent l'invention sans toutefois la limiter.

### Préparation de la cellule électrochimique

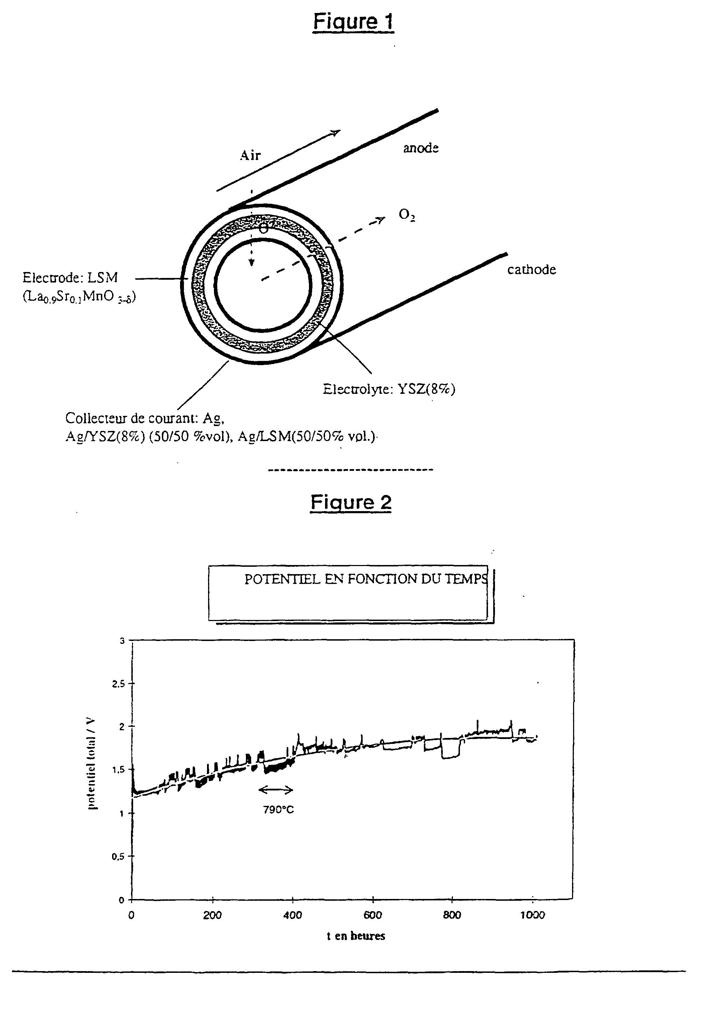

On a analysé les propriétés éléctrochimiques d'une cellule tubulaire illustrée, par la figure 1, recouverte sur ses deux faces par deux couches de matériau de la famille des ferrocobaltites, LSCoFe (La_{0.8}Sr_{0.2}Co_{0.8}Fe_{0.2}O_{w}) Après le dépôt de chaque couche, le tube a été fritté sous air à 800°C-850°C, pendant quelques heures, avec des paliers de température compris entre 0,5 heure et 6 heures.

### Exemple 1 : paramètres de fonctionnement : température : 780 °C pression (interne d'oxygène) : 20×10⁵ Pa (20 bars) - Intensité : 10A

On a préparé une cellule électrochimique tubulaire constituée d'un électrolyte solide en YSZ(8%) (longueur: 355mm, surface active : 68 cm², épaisseur : 0.5 mm, diamètre intérieur : 9 mm), de deux électrodes en manganite de lanthane dopé au strontium (LSM : La_{0.9}Sr_{0.1}MnOₓ) (épaisseur : 10-30 µm, porosité :30-50%), de deux collecteurs de courant en cermet Ag/YSZ(8%)(50/50 en vol.) (épaisseur : 50 µm, porosité entre 30 et 50 %) et d'une couche protectrice sur chacune des faces de la membrane en LSCoFe (La_{0.8}Sr_{0.2}Co_{0.8}Fe_{0.2}O_{w}) (épaisseur : 50-90 µm ; porosité : 20-70%) (conditions de dépôt : 800 °C/0,5-2 h)

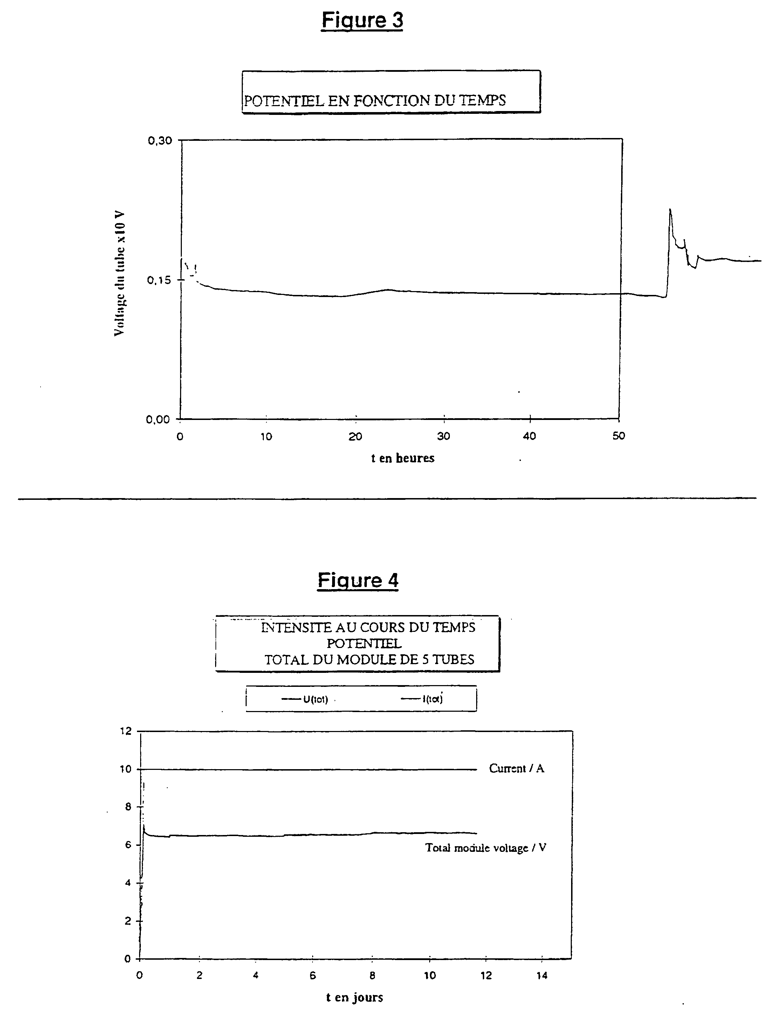

Le système a fonctionné en continu durant plus de 42 jours (1000 heures) sous 20×10⁵ Pa (20 bars) d'oxygène à 780 °C. Après 18 jours (450 h) de fonctionnement, le potentiel total de cellule se stabilise entre 1,7 et 1,9 V. Le rendement faradique est de 100%. L'augmentation initiale du potentiel de 1.35 à 1.7 V est probablement liée à un phénomène de frittage / ségrégation des particules d'argent contenu dans le cermet collecteur de courant Ag/YSZ (8% mol.). Ce phénomène a pour origine la température de fonctionnement élevée de la cellule (inhomogénéité du gradient thermique du four (variation de 680 à 800 °C le long de la surface active: 24 cm) Les dépôts des différentes couches (électrodes, collecteurs de courant, couches protectrices) sont réalisés par la technique de dépôt dite "pinceau-goupillon".
Les résultats sont représentés par la figure 2

### Exemple 2 : paramètres de fonctionnement : température : 765 °C pression (interne d'oxygène) : 20×10⁵ Pa (20 bars) - Intensité : 10A

On utilise une cellule électrochimique tubulaire identique à celle de l'exemple 1 dans sa conception. Le paramètre expérimental variable est la température de fonctionnement, de l'ordre de 765 °C avec un gradient de température de l'ordre de +/-10 °C sur la zone active. La cellule tubulaire électrochimique est constituée d'un électrolyte solide en YSZ(8%) (longueur : 355mm ; surface active : 68 cm² ; épaisseur : 0.5 mm ; diamètre intérieur : 9 mm), deux électrodes en manganite de lanthane dopé au strontium (LSM : La_{0.9}Sr_{0.1}MnOₓ) (épaisseur : 10-30 µm ; porosité : entre 30 et 50 % ), de deux collecteurs de courant : cermet Ag/YSZ(8%) (50/50 en vol.) (épaisseur de l'ordre de 50 µm ; porosité comprise entre 30 et 50 %) et d'une couche protectrice sur les faces interne et externe due la cellule en LSCoFe (La_{0.8}Sr_{0.2}Co_{0.8}Fe_{0.2}O_{w}) (épaisseur comprise entre 40 et 100 µm ; porosité : 20-70%) (conditions de dépôt : 800°C/2h) ;
Les dépôts des différentes couches (électrodes, collecteurs de courant, couches protectrices) sont réalisés par la technique de dépôt dite "pinceau-goupillon".
La température de travail est de 765°C sous 20×10⁵ Pa (20 bars) d'oxygène. Le système est stable à 1. 40 V, après 3 jours de fonctionnement.
Les résultats sont représentés par la figure 3.

### Exemple 3 : paramètres de fonctionnement : température : 750 °C - pression (interne d'oxygène) : 10×10⁵ Pa (10 bars) - Intensité : 10A

On utilise une cellule électrochimique tubulaire identique à celle des exemples 1 et 2 en terme d'électrolyte solide, d'électrode et de couche protectrice. Le collecteur de courant n'est plus un cermet Ag/YSZ (8% mol.), qui est un oxyde céramique conducteur ionique, mais un cermet Ag/LSM qui est un oxyde céramique conducteur mixte de type pérovskite.

La cellule tubulaire électrochimique préparée est constituée d'un électrolyte solide en YSZ(8%) (longueur : 355 mm, surface active : 68 cm²; épaisseur : 1.02 mm ; diamètre intérieur ; 7,5 mm), de deux électrodes en manganite de lanthane dopé au strontium (LSM : La_{0.9}Sr_{0.1}MnOₓ) (épaisseur : 10-30 µm ; porosité : 30-50%), de deux collecteurs de courant en cermet Ag/LSM (8%)(50/50 en vol.) (épaisseur : 50 µm, porosité entre 30 et 50 %) et d'une couche protectrice sur chacune des faces de la membrane en LSCoFe (La_{0.8}Sr_{0.2}Co_{0.8}Fe_{0.2}O_{w}) (épaisseur : entre 70 et 90 µm, porosité : 30-50%) (conditions de dépôt : 800 °C/0,5 h). Les dépôts des différentes couches (électrodes, collecteurs de courant, couches protectrices) sont réalisés par enrobage par immersion (dip coating).

Les résultats présentés concernent un système tubulaire constitué de cinq cellules électrochimiques élémentaires. Le système a fonctionné en continu durant plus de 12 jours (300 heures) sous 10×10⁵ Pa (10 bars) d'oxygène à 750 °C. Le potentiel total du système de cinq cellules se stabilise rapidement (après quelques heures) à 6.5 V, soit 1.3 V par tube en moyenne. Le rendement faradique est de 100%.
Les résultats sont représentés par la figure 4.

### Conclusion

Dans les trois exemples, l'apport de couche protectrice à base de LSCoFe arrête le phénomène de vieillissement. De plus, une baisse de la température de fonctionnement ralentit, voire arrête les phénomènes de frittage / ségrégation et de diffusion des particules métalliques (de l'argent en particulier) au sein de l'électrolyte solide (stabilisation du rendement faradique à 100%). Il est à signaler que la couche protectrice doit absolument être inerte chimiquement non seulement vis-à-vis du matériau collecteur de courant mais également des matériaux d'électrode(s) et de l'électrolyte solide.

A titre d'exemples supplémentaires conduisant aux résultats avantageux décrits ci-dessus, il y a les cellules électrochimiques dans lesquelles :
- la couche protectrice est constituée d'une pérovskite de type LSCoFe ou autre, possédant des propriétés de conductivité mixte à basse température (<800°C). Il peut également s'agir d'autres structures cristallines conductrices ioniques ou mixtes (phases dites d'Aurivillius, brown-millerite, pyrochlore, fluorite, ...) ;
- la couche protectrice ne possède pas de propriétés de conduction mixte, ionique ou électronique. Il peut s'agir d'un isolant. La couche doit cependant être suffisamment poreuse et d'épaisseur contrôlée pour permettre la diffusion de l'oxygène au sein du système et ne pas influer sur les performances électrochimiques de la cellule ;
- des billes de mullite ou de zircone (diamètre compris entre 0.2 et 1 mm) peuvent remplir le tube de manière à fixer mécaniquement le fil d'argent interne. Ces billes peuvent éventuellement être recouvertes d'une couche collecteur de courant, de même nature que la couche collecteur de courant déposée sur le système tubulaire (laque d'argent, mélange Argent/LSM (50/50, % vol.), laque d'or, ...).

## Revendications

1. Membrane céramique conductrice par ions oxyde, **caractérisée en ce qu'**elle comprend un volume non nul d'épaisseur totale non nulle E, d'un ensemble constitué :
a) - d'une couche dense de surfaces opposées S et S' et d'épaisseur non nulle e, d'un électrolyte solide ayant, à la température d'électrolyse, une structure cristalline conductrice par ions oxyde ,
b) - de deux électrodes poreuses, conductrices mixtes et d'épaisseurs non nulles e₁, et e'₁, identiques ou différentes, plaquées sur des surfaces non nulles s₁ et s'₁ identiques ou différentes, des deux faces opposées de surfaces S et S' dudit électrolyte solide,
c) - de deux collecteurs de courant poreux, d'épaisseurs non nulles, e₂ et e'₂, identiques ou différentes, plaqués sur des surfaces non nulles s₂ et s'₂, identiques ou différentes, desdites deux électrodes poreuses et,
d) - d'au moins une couche poreuse de revêtement, d'épaisseur e₃ non nulle, plaquée sur une surface non nulle s₃, d'au moins un desdits collecteurs, constituée d'un matériau, ou d'un mélange de matériaux, chimiquement compatible avec les matériaux, ou les mélange de matériaux, desdits électrodes, collecteurs et électrolyte solide, et dont la température de frittage est très proche des températures de frittage des matériaux, ou des mélanges de matériaux constituant lesdits desdits électrodes, collecteurs et électrolyte solide et **caractérisée en ce que** l'épaisseur E de ladite membrane, est égale à la somme des épaisseurs de chacun des éléments cités,
dans laquelle :
l'électrolyte solide est représenté par la formule (I):
(M_{α}O_{β})₁₋ₓ (R_{γ}O_{δ})ₓ (I)
dans laquelle M représente au moins un atome trivalent ou tétravalent choisi parmi Bi, Ce, Zr, Ga, Th ou Hf, α et β sont tels que la structure M_{α}O_{β} est électriquement neutre, R représente au moins un atome divalent ou trivalent choisi parmi Mg, Ca, Ba, Sr, Gd, Sc, Yb, Y, Sm ou La, d est tel que la structure R_{γ}O_{δ} est électriquement neutre, x est compris entre 0,05 et 0,30 et plus particulièrement, entre 0,075 et 0,15,
les collecteurs de courant, plaqués sur lesdites deux électrodes poreuses, de compositions identiques ou différentes, sont constitués essentiellement, soit par un métal, soit par une laque de métal telle que par exemple, une laque d'or ou une laque d'argent, soit par un mélange métal / céramique "oxyde inerte" tel que l'alumine ou par un mélange métal / céramique oxyde "conducteur mixte" tel qu'un matériau pérovskite ou par un mélange métal / céramique oxyde "conducteur ionique" tel que la zircone stabilisée à l'yttrium (8% mol.) ou par un mélange métal / céramique oxyde "conducteur électronique" tel que l'oxyde de nickel ou par un mélange métal / carbure tel que le carbure de silicium ou par un mélange métal / nitrure tel que le nitrure de silicium,
les électrodes, de composition identiques ou différent, sont en un matériau ou en un mélange de matériaux représentés par la formule (II):
M₁M₂O₃ (II)
dans laquelle, M₁ représente un ou plusieurs atoms choisis parmi La, Ce, Pr, Nd, Pm, Sm, Eu, Gd, Tb, Dy, Ho, Er, Tm, Yb, Lu, Y, Mg, Ca, Sr ou Ba, M₂ représente un ou plusieurs atom choisis parmi Sc, Ti, V, Cr, Mn, Fe, Co, Ni, Cu ou Zn, et
la couche de revêtement, plaquée sur au moins un desdits collecteurs ou les couches de revêtement, de compositions identiques ou différentes plaquées sur chacun desdits collecteurs, sont isolantes ou sont des composés ou des mélanges de composés de formule (II) telle que définie précédemment et notamment un composé de formule LaᵤSrᵥCo_{d}Fe_{c}O_{w}, dans lesquels u + v et c + d sont égaux à 1 et w est tel que la structure en cause est électriquement neutre.

2. Membrane céramique, telle que définie à la revendication 1, comprenant deux couches de revêtement d'épaisseurs non nulles e₃ et e'₃, identiques ou différentes, plaquées sur des surfaces non nulles s₃, et s'₃, identiques ou différentes, de chacun desdits collecteurs de courant et **caractérisée en ce que** l'épaisseur E dudit volume de ladite membrane est égale à la somme des épaisseurs e + e₁ + e'₁ + e₂ + e'₂ + e₃ + e'₃.

3. Membrane céramique, telle que définie à l'une des revendications 1 ou 2, **caractérisée en ce que** e₁ = e'₁, e₂ = e'₂ et, le cas échéant, e₃ = e'₃.

4. Membrane céramique, telle que définie à l'une des revendications 1 à 3, **caractérisée en ce que** e est comprise entre environ 0.1 mm et environ 2 mm et plus particulièrement entre environ 0,5 mm et environ 1 mm, e₁ et e'₁ sont comprises entre environ 5 µm et environ 50 µm et plus particulièrement entre environ 10 µm et environ 30 µm, e₂ et e'₂ sont comprises entre environ 5 µm et environ 100 µm et plus particulièrement entre environ 20 µm et environ 60 µm et, e₃ et, le cas échéant e'₃. sont comprises entre environ 1 µm et environ 200 µm et plus particulièrement entre environ 20 µm et environ 100 µm.

5. Membrane céramique, telle que définie à l'une des revendications 1 à 4, consistant en une plaque de surfaces planes S et d'épaisseur E.

6. Membrane céramique, telle que définie à la revendication 5, consistant en une plaque de longueur L, comprise entre environ 1 cm et environ 1 m et plus particulièrement, entre 5 cm et environ 50 cm et de largeur 1, comprise entre environ 1 cm et environ 1 m et plus particulièrement entre 5 cm et environ 50 cm.

7. Membrane céramique, telle que définie à l'une des revendications 1, à 4, consistant en un cylindre de diamètre extérieur D et de diamètre intérieur d, **caractérisée en ce que** la couche de support est la couche dense cylindrique, d'épaisseur e, d'électrolyte solide, et **en ce que** la moitié de la différence D - d est égale à la somme des épaisseurs e, e_{1,}, e'₁, e₂, e'₂ et e₃, ajoutée éventuellement de e'₃.

8. Membrane céramique, telle que définie à la revendication 7, de longueur L comprise environ entre 1 cm et environ 1 m et plus particulièrement entre 10 cm et 50 cm.

9. Membrane céramique telle que définie à l'une des revendications 1 à 8, dans laquelle l'électrolyte solide est un oxyde céramique ou un mélange d'oxydes céramiques, choisi parmi ZrO₂, CeO₂, HfO₂, ThO₂, Ga₂O₃ ou Bi₂O₃, dopé avec un ou plusieurs oxydes choisis parmi MgO, CaO, BaO, SrO, Gd₂O₃, Sc₂O₃, Yb₂O₃, Er₂O₃, Y₂O₃, Sm₂O₃, In₂O₃, Nb₂O₃ et La₂O₃.

10. Membrane céramique, telle que définie à la revendication 9, dans laquelle l'électrolyte solide est l'oxyde de zirconium stabilisé à l'oxyde d'yttrium de formule (Ia):
(ZrO₂)₁₋ₓ (Y₂O₃)ₓ.
dans laquelle x est compris entre 0,05 et 0,15.

11. Membrane céramique, telle que définie à l'une des revendications 1 à 10, dans laquelle les électrodes, de compositions identiques ou différentes, sont en un matériau ou en un mélange de matériaux choisis parmi LaNiO₃, CaᵤLaᵥMnO_{w}, LaᵤSrᵥMnO_{w}, LaᵤSrᵥCoO_{w}, CaᵤLaᵥCoO_{w}, GdᵤSr_{y}CoO_{w}, LaᵤSrᵥCrO_{w}, LaᵤSrᵥFeO_{w} ou LaᵤSrᵥFe_{c}Co_{d}O_{w}, dans lesquels u + v et c + d sont égaux à 1 et w est tel que la structure en cause est électriquement neutre.

12. Membrane céramique, telle que définie à l'une des revendications 1 à 11, dans laquelle les collecteurs de courant, de compositions identiques ou différentes, sont en un mélange d'un métal choisi parmi les métaux de transition, plus particulièrement parmi, l'argent, le cuivre, le nickel ou parmi les métaux nobles, plus particulièrement parmi l'or, le platine ou le palladium, avec un ou plusieurs composés de formule (I) telle que définie précédemment ou en un mélange d'un métal tel que défini précédemment, avec un ou plusieurs composés de formule (II) telle que définie précédemment.

13. Membrane céramique, telle que définie à la revendication 12, dans laquelle les collecteurs de courant, de composition identique, sont en un mélange d'argent et de céramique "conductrice ionique" telle que la zircone dopée à l'oxyde d'yttrium.

14. Membrane céramique, telle que définie à l'une des revendications 1 à 13, dans laquelle la couche de revêtement, plaquée sur au moins un desdits collecteurs ou les couches de revêtement, de composition identique, plaquées sur chacun desdits collecteurs et est un composé de formule (IIa):
La_{0,8}Sr_{0,2}Co_{0,8}Fe_{0,2}O_{w} (IIa)
dans laquelle w est tel que la structure de formule (IIa), est électriquement neutre.

15. Membrane céramique, telle que définie à l'une des revendications 2 à 14, dans laquelle chacun des collecteurs de courant est apte à être relié à la partie extérieure du circuit par un fil conducteur électronique, en un métal identique à celui que ledit collecteur comporte.

16. Membrane céramique, telle que définie à l'une des revendications 2, 7, 8 et 15, **caractérisée en ce qu'**elle est remplie de billes de mullite ou de zircone.

17. Utilisation d'une membrane telle que définie à l'une des revendications 1 à 16, pour séparer l'oxygène de l'air ou d'un mélange gazeux, en contenant.

## Patentansprüche

1. Oxidionenleitende Keramikmembran, **dadurch gekennzeichnet, daß** sie ein von Null verschiedenes Volumen mit einer von Null verschiedenen Gesamtdicke E einer Anordnung aus:
a) einer dichten Schicht mit gegenüberliegenden Oberflächen S und S' einer von Null verschiedenen Dicke e aus einem Festelektrolyten, der bei der Elektrolysetemperatur eine oxidionenleitende Kristallstruktur aufweist,
b) zwei porösen Mischleiter-Elektroden mit von Null verschiedenen, gleichen oder verschiedenen Dicken e₁ und e'₁, die auf die von Null verschiedenen, gleichen oder verschiedenen Oberflächen s₁ und s'₁ der beiden gegenüberliegenden Seiten der Oberflächen S und S' des Festelektrolyten aufgebracht sind, und
c) zwei poröse Stromsammler mit von Null verschiedenen, gleichen oder verschiedenen Dicken e₂ und e'₂, die auf die von Null verschiedenen, gleichen oder verschiedenen Oberflächen s₂ und s'₂ der beiden porösen Elektroden aufgebracht sind, und
d) mindestens einer porösen Überzugsschicht mit einer von Null verschiedenen Dicke e₃, die auf eine von Null verschiedene Oberfläche s₃ mindestens eines der Stromsammler aufgebracht ist und aus einem Material oder einem Gemisch von Materialien besteht, die mit den Materialien oder Gemischen von Materialien der Elektroden, der Stromsammler und des Festelektrolyten chemisch verträglich sind und deren Sintertemperatur in der Nähe der Sintertemperatur der Materialien oder Gemischen von Materialien, aus denen die Elektroden, die Stromsammler und der Festelektrolyt bestehen, liegt, und **dadurch gekennzeichnet, daß** die Dicke E der Membran gleich der Summe der Dicken jedes der genannten Elemente ist,
enthält,
wobei:
der Festelektrolyt durch die Formel (I) wiedergegeben wird:
(M_{α}O_{β})₁₋ₓ(R_{γ}O_{δ})ₓ (I),
worin M für mindestens ein drei- oder vierwertiges, unter Bi, Ce, Zr, Ga, Th oder Hf ausgewähltes Atom steht, α und β solche Werte haben, daß die M_{α}O_{β}-Struktur elektrisch neutral ist, R für mindestens ein zweiwertiges oder dreiwertiges, unter Mg, Ca, Ba, Sr, Gd, Sc, Yb, Y, Sm oder La ausgewähltes Atom steht, d einen solchen Wert hat, daß die R_{γ}O_{δ}-Struktur elektrisch neutral ist, und x zwischen 0,05 und 0,30 und insbesondere zwischen 0,075 und 0,15 liegt,
die auf die beiden porösen Elektroden aufgebrachten Stromsammler gleicher oder verschiedener Zusammensetzung im wesentlichen entweder aus einem Metall oder aus einem Metallack, wie beispielsweise einem Silber- oder Goldlack, oder aus einem Gemisch aus Metall und "Inertoxid"-Keramik, wie Aluminiumoxid, oder einem Gemisch aus Metall und "Mischleiter"-Oxidkeramik, wie einem Perowskit-Material, oder einem Gemisch aus Metall und "Ionenleiter"-Oxidkeramik, wie mit Yttrium (8 Mol-%) stabilisiertem Zirconiumoxid, oder einem Gemisch aus Metall und "Elektronenleiter"-Oxidkeramik, wie Nickeloxid, oder einem Gemisch aus Metall und Carbid, wie Siliciumcarbid, oder einem Gemisch aus Metall und Nitrid, wie Siliciumnitrid, bestehen,
die Elektroden gleicher oder verschiedener Zusammensetzung aus einem Material oder Gemisch von Materialien der Formel (II):
M₁M₂O₃ (II),
worin M₁ für ein oder mehrere, unter La, Ce, Pr, Nd, Pm, Sm, Eu, Gd, Tb, Dy, Ho, Er, Tm, Yb, Lu, Y, Mg, Ca, Sr und Ba ausgewählte Atome steht und M₂ für ein oder mehrere, unter Sc, Ti, V, Cr, Mn, Fe, Co, Ni, Cu und Zn ausgewählte Atome steht, bestehen und
es sich bei der auf mindestens einen der Stromsammler aufgebrachten Überzugsschicht bzw. den auf jeden der Stromsammler aufgebrachten Überzugsschichten gleicher oder verschiedener Zusammensetzung um Nichtleiter oder um Verbindungen oder Gemische von Verbindungen der Formel (II) gemäß obiger Definition und insbesondere eine Verbindung der Formel LaᵤSrᵥCO_{d}Fe_{c}O_{w}, worin u + v und c + d gleich 1 sind und w einen solchen Wert hat, daß die betreffende Struktur elektrisch neutral ist.

2. Keramikmembran nach Anspruch 1, enthaltend zwei Überzugsschichten mit von Null verschiedenen, gleichen oder verschiedenen Dicken e₃ und e'₃, die auf die von Null verschiedenen, gleichen oder verschiedenen Oberflächen s₃ und s'₃ jedes der Stromsammler aufgebracht sind, und **dadurch gekennzeichnet, daß** die Dicke E des Volumens der Membran gleich der Summe der Dicken e + e₁ + e'₁ + e₂ + e'₂ + e₃ + e'₃ ist.

3. Keramikmembran nach Anspruch 1 oder 2, **dadurch gekennzeichnet, daß** e₁ = e'₁, e₂ = e'₂ und gegebenenfalls e₃ = e'₃.

4. Keramikmembran nach einem der Ansprüche 1 bis 3, **dadurch gekennzeichnet, daß** e zwischen etwa 0,1 mm und etwa 2 mm und insbesondere zwischen etwa 0,5 mm und etwa 1 mm liegt, e₁ und e'₁ zwischen etwa.5 µm und etwa 50 µm und insbesondere zwischen etwa 10 µm und etwa 30 µm liegen, e₂ und e'₂ zwischen etwa 5 µm und etwa 100 µm und insbesondere zwischen etwa 20 µm und etwa 60 µm liegen und e₃ und gegebenenfalls e'₃ zwischen etwa 1 µm und etwa 200 µm und insbesondere zwischen etwa 20 µm und etwa 100 µm liegen.

5. Keramikmembran nach einem der Ansprüche 1 bis 4, bestehend aus einer Platte mit planen Oberflächen S und einer Dicke E.

6. Keramikmembran nach Anspruch 5, bestehend aus einer Platte mit einer Länge L zwischen etwa 1 cm und etwa 1 m und insbesondere zwischen 5 cm und etwa 50 cm und einer Breite 1 zwischen etwa 1 cm und etwa 1 m und insbesondere zwischen 5 cm und etwa 50 cm.

7. Keramikmembran nach einem der Ansprüche 1 bis 4, bestehend aus einem Zylinder mit einem Außendurchmesser D und einem Innendurchmesser d, **dadurch gekennzeichnet, daß** es sich bei der Trägerschicht um eine zylindrische dichte Schicht mit einer Dicke e aus Festelektrolyt handelt und die Hälfte der Differenz D - d gleich der Summe der Dicken e, e₁, e'₁, e₂, e'₂ und e₃ sowie gegebenenfalls e'₃ ist.

8. Keramikmembran nach Anspruch 7 mit einer Länge L zwischen etwa 1 cm und etwa 1 m und insbesondere zwischen 10 cm und 50 cm.

9. Keramikmembran nach einem der Ansprüche 1 bis 8, in der es sich bei dem Festelektrolyt um eine Oxidkeramik oder ein Gemisch von Oxidmaterialien, die unter mit einem oder mehreren, unter MgO, CaO, BaO, SrO, Gd₂O₃, SC₂O₃, Yb₂O₃, Er₂O₃, Y₂O₃, Sm₂O₃, In₂O₃, Nb₂O₃ und La₂O₃ ausgewählten Oxiden dotiertem ZrO₂, CeO₂, HfO₂, ThO₂, Ga₂O₃ und Bi₂O₃ ausgewählt sind, handelt.

10. Keramikmembran nach Anspruch 9, in der es sich bei dem Festelektrolyt um mit Yttriumoxid stabilisiertes Zirconiumoxid der Formel (Ia):
(ZrO₂)₁₋ₓ(Y₂O₃)ₓ,
worin x zwischen 0,05 und 0,15 liegt, handelt.

11. Keramikmembran nach einem der Ansprüche 1 bis 10, in der die Elektroden gleicher oder verschiedener Zusammensetzung aus einem Material oder Gemisch von Materialien, die unter LaNiO₃, CaᵤLaᵥMnO_{w}, LaᵤSrᵥMnO_{w}, LaᵤSrᵥCoO_{w}, CaᵤLaᵥCoO_{w}, GdᵤSrᵥCoO_{w}, LaᵤSrᵥCrO_{w}, LaᵤSrᵥFeO_{w} und LaᵤSrᵥFe_{c}Co_{d}O_{w}, worin u + v und c + d gleich 1 sind und w einen solchen Wert hat, daß die betreffende 'Struktur elektrisch neutral ist, ausgewählt sind, bestehen.

12. Keramikmembran nach einem der Ansprüche 1 bis 11, in der die Stromsammler gleicher oder verschiedener Zusammensetzung aus einem Gemisch aus einem unter den Übergangsmetallen, insbesondere unter Silber, Kupfer und Nickel, oder den Edelmetallen, insbesondere Gold, Platin und Palladium, ausgewählten Metall und einer oder mehreren Verbindungen der Formel (I) gemäß obiger Definition oder einem Gemisch aus einem Metall gemäß obiger Definition und einer oder mehreren Verbindungen der Formel (II) gemäß obiger Definition bestehen.

13. Keramikmembran nach Anspruch 12, in der die Stromsammler gleicher Zusammensetzung aus einem Gemisch aus Silber und "Ionenleiter"-Keramik, wie mit Yttriumoxid dotiertem Zirconiumoxid, bestehen.

14. Keramikmemban nach einem der Ansprüche 1 bis 13, in der es sich bei der auf mindestens einen der Stromsammler aufgebrachten Überzugsschicht bzw. den auf jeden der Stromsammler aufgebrachten Überzugsschichten gleicher Zusammensetzung um eine Verbindung der Formel (IIa):
La_{0,8}Sr_{0,2}Co_{0,8}Fe_{0,2}O_{w} (IIa),
worin w einen solchen Wert hat, daß die Struktur der Formel (IIa) elektrisch neutral ist, handelt.

15. Keramikmembran nach einem der Ansprüche 2 bis 14, in der jeder der Stromsammler über einen elektronenleitenden Draht aus dem gleichen Metall wie der Stromsammler mit dem externen Teil des Stromkreises verbunden werden kann.

16. Keramikmembran nach einem der Ansprüche 2, 7, 8 und 15, **dadurch gekennzeichnet, daß** sie mit Mullit- oder Zirconiumoxidkügelchen gefüllt ist.

17. Verwendung einer Membran nach einem der Ansprüche 1 bis 16 zur Abtrennung von Sauerstoff aus Luft oder einem Sauerstoff enthaltenden Gasgemisch.

## Claims

1. Oxide-ion conductive ceramic membrane, **characterized in that** it comprises a non-zero volume, of non-zero total thickness E, of an assembly consisting of:
a) a dense layer, having opposed faces of areas S and S' and having a non-zero thickness e, of a solid electrolyte having, at the electrolysis temperature, a crystal structure which is an oxide ion conductor;
b) two porous electrodes, which are hybrid conductors and have non-zero thicknesses e₁ and e'₁, which are identical or different, coated on non-zero areas s₁ and s'₁, which are identical or different, of the two opposed faces of areas S and S' of the said solid electrolyte;
c) two porous current collectors, of non-zero thicknesses e₂ and e'₂, which are identical or different, coated on non-zero areas s₂ and s'₂, which are identical or different, of the said two porous electrodes; and
d) at least one porous covering layer, of non-zero thickness e₃, coated on a non-zero area s₃, of at least one of the said collectors, made of a material, or of a mixture of materials, which is chemically compatible with the materials, or the mixture of materials, of the said electrodes, the said collectors and the said solid electrolyte, and the sintering temperature of which is very close to the sintering temperatures of the materials, or of the mixtures of materials, of which the said electrodes, the said collectors and the said solid electrolyte are composed, and **characterized in that** the thickness E of the said membrane is equal to the sum of the thicknesses of each of the elements mentioned,
in which
the solid electrolyte is represented by the formula (I) :
(M_{α}O_{β})₁₋ₓ(R_{γ}O_{δ})ₓ (I)
in which M represents at least one trivalent or tetravalent atom chosen from Bi, Ce, Zr, Ga, Th and Hf, α and β are such that the M_{α}O_{β} structure is electrically neutral, R represents at least one divalent or trivalent atom chosen from Mg, Ca, Ba, Sr, Gd, Sc, Yb, Y, Sm and La, d is such that the R_{γ}O_{δ} structure is electrically neutral and x ranges between 0.05 and 0.30 and more particularly between 0.075 and 0.15, the current collectors coated on the said two porous electrodes, of identical or different compositions, essentially consist either of a metal or of a metal lacquer, such as a gold lacquer of a silver lacquer for example, or of a metal/"inert oxide" ceramic (such as alumina) mixture or of a metal/"hybrid conductor" oxide ceramic (such as a perovskite material) mixture or of a metal/"ion conductor" oxide ceramic (such as (8 mol%) yttria-stabilized zirconia) mixture or of a metal/"electron conductor" oxide ceramic (such as nickel oxide) mixture or of a metal/carbide (such as silicon carbide) mixture or of a metal/nitride (such as silicon nitride) mixture,
the electrodes, of identical or different compositions, are made of a material or of a mixture of materials represented by the formula (II):
M₁M₂O₃ (II)
in which M₁ represents one or more atoms chosen from La, Ce, Pr, Nd, Pm, Sm, Eu, Gd, Tb, Dy, Ho, Er, Tm, Yb, Lu, Y, Mg, Ca, Sr and Ba and M₂ represents one or more atoms chosen from Sc, Ti, V, Cr, Mn, Fe, Co, Ni, Cu and Zn, and the covering layer, coated on at least one of the said collectors, or the covering layers, of identical or different compositions, coated on each of the said collectors, are insulating or are compounds or mixtures of compounds of formula (II) as defined above and especially a compound of formula LaᵤSrᵥCo_{d}Fe_{c}O_{w}, in which u+v and c+d are equal to 1 and w is such that the structure in question is electrically neutral.

2. Ceramic membrane as defined in Claim 1, comprising two covering layers of non-zero thicknesses e₃ and e'₃, which are identical or different, coated on non-zero areas s₃ and s'₃, which are identical or different, of each of the said current collectors, and **characterized in that** the thickness E of the said volume of the said membrane is equal to the sum of the thicknesses e+e₁+e'₁+e₂+e'₂+e₃+e'₃.

3. Ceramic membrane as defined in either of Claims 1 and 2, **characterized in that** e₁=e'₁, e₂=e'₂ and, where appropriate, e₃=e'₃.

4. Ceramic membrane as defined in one of Claims 1 to 3, **characterized in that** e ranges between approximately 0.1 mm and approximately 2 mm and more particularly between approximately 0.5 mm and approximately 1 mm, e₁ and e'₁ range between approximately 5 µm and approximately 50 µm and more particularly between approximately 10 µm and approximately 30 µm, e₂ and e'₂ range between approximately 5 µm and approximately 100 µm and more particularly between approximately 20 µm and approximately 60 µm and e₃ and, where appropriate, e'₃, range between approximately 1 µm and approximately 200 µm and more particularly between approximately 20 µm and approximately 100 µm.

5. Ceramic membrane as defined in one of Claims 1 to 4, consisting of a sheet having plane faces of area S and of thickness E.

6. Ceramic membrane as defined in Claim 5, consisting of a sheet of length L ranging between approximately 1 cm and approximately 1 m and more particularly between 5 cm and approximately 50 cm and of width 1 ranging between approximately 1 cm and approximately 1 m and more particularly between 5 cm and approximately 50 cm.

7. Ceramic membrane as defined in one of Claims 1 to 4, consisting of a cylinder of external diameter D and of internal diameter d, **characterized in that** the support layer is the cylindrical dense layer, of thickness e, of solid electrolyte and **in that** half the difference D-d is equal to the sum of the thicknesses e, e₁, e'₁, e₂, e'₂ and e₃, to which e'₃ is possibly added.

8. Ceramic membrane as defined in Claim 7, of length L ranging between approximately 1 cm and approximately 1 m and more particularly between 10 cm and 50 cm.

9. Ceramic membrane as defined in one of Claims 1 to 8, in which the solid electrolyte is a ceramic oxide or a mixture of ceramic oxides, which is chosen from ZrO₂, CeO₂, HfO₂, ThO₂, Ga₂O₃ and Bi₂O₃, which is doped with one or more oxides chosen from MgO, CaO, BaO, SrO, Gd₂O₃, Sc₂O₃, Yb₂O₃, Er₂O₃, Y₂O₃, Sm₂O₃, In₂O₃, Nb₂O₃ and La₂O₃.

10. Ceramic membrane as defined in Claim 9, in which the solid electrolyte is yttria-stabilized zirconium oxide of formula (Ia):
(ZrO₂)₁₋ₓ(Y₂O₃)ₓ
in which x is between 0.05 and 0.15.

11. Ceramic membrane as defined in one of Claims 1 to 10, in which the electrodes, of identical or different compositions, are made of a material or of a mixture of materials chosen from LaNiO₃, CaᵤLaᵥMnO_{w}, LaᵤSrᵥMnO_{w}, LaᵤSrᵥCoO_{w}, CaᵤLaᵥCoO_{w}, GdᵤSr_{y}CoO_{w}, LaᵤSrᵥCrO_{w}, LaᵤSrᵥFeO_{w} and LaᵤSrᵥFe_{c}Co_{d}O_{w}, in which u+v and c+d are equal to 1 and w is such that the structure in question is electrically neutral.

12. Ceramic membrane as defined in one of Claims 1 to 11, in which the current collectors, of identical or different compositions, are made of a mixture of a metal chosen from the transition metals, more particularly chosen from silver, copper and nickel, or chosen from the noble metals, more particularly chosen from gold, platinum and palladium, with one or more compounds of formula (I) as defined above, or made of a mixture of a metal as defined above with one or more compounds of formula (II) as defined above.

13. Ceramic membrane as defined in Claim 12, in which the current collectors, of identical composition, are made of a mixture of silver and of an "ion conductor" ceramic such as yttria-doped zirconia.

14. Ceramic membrane as defined in one of Claims 1 to 13, in which the covering layer, coated on at least one of the said collectors, or the covering layers, of identical composition, coated on each of the said collectors, is or are a compound of formula (IIa):
La_{0.8}Sr_{0.2}Co_{0.8}Fe_{0.2}O_{w} (IIa)
in which w is such that the structure of formula (IIa) is electrically neutral.

15. Ceramic membrane as defined in one of Claims 2 to 14, in which each of the current collectors is capable of being connected to the external part of the circuit by an electronically conducting wire made of a metal identical to that of which the said collector is composed.

16. Ceramic membrane as defined in one of Claims 2, 7, 8 and 15, **characterized in that** it is filled with beads of mullite or of zirconia.

17. Use of a membrane as defined in one of Claims 1 to 16 for separating oxygen from air or from a gas mixture containing it.
